# EUROPEAN PATENT SPECIFICATION

(11) **EP 1 021 738 B1**
(45) Date of publication and mention of the grant of the patent: **20.01.2010**
(21) Application number: 98946726.1
(22) Date of filing: 08.09.1998
(51) Int. Cl.: G02B 6/38

(54) **DEVICE FOR PROTECTING FIBEROPTICAL CONTACTS**
VORRICHTUNG ZUM SCHÜTZEN FASEROPTISCHER KONTAKTE
DISPOSITIF DE PROTECTION DE CONNECTIONS PAR FIBRES OPTIQUES

(30) Priority: 06.10.1997 NO 974600
(43) Date of publication of application: 26.07.2000
(73) Proprietor: Optoplan AS, 7075 Tiller (NO)
(72) Inventor: BERG, Arne, N-7082 Kattem (NO)
(74) Representative: Plougmann & Vingtoft A/S
(86) International application number: PCT/NO1998/000272
(87) International publication number: WO 1999/021041

(56) References cited:
- EP-A1- 0 538 089
- GB-A- 2 110 834
- US-A- 4 913 514
- US-A- 5 645 438

## Description

The invention relates to a device for protecting fiberoptical contacts, according to the preamble of patent claim 1.

### Background

When connecting fiberoptical contacts in environments where sand or other pollution is present, problems can occur in establishing the exact position of the opposite optical fibres in the contact, because particles jam between the contacting surfaces. Therefore it can be difficult to achieve a connection between a female and male contact and/or to achieve a throughput of the signal from one optical fibre to the other.

One example of a situation where the above is a distinctive problem, is fiberoptical contacts that are established in the wellhead of subsea oil wells, to monitor/supervise physical parameters down in the wellhead. When installing the production pipe after the drilling is done, the production pipe is fastened with other connections, such as supervising systems, at a tubing hanger which is then lowered down onto the bore head. This operation normally involves accumulating sand and gravel at the top and inside of the hanger. Therefore before the valve tree can be fastened to the tubing hanger on the bore head, to establish connection of production pipes, signal cables etc., sand and gravel must be removed with a flushing operation and then there must be subsequent inspection of the same.

To connect the contact halves, the female contact must be lead down into the hole where the male contact is fixed. An amount of fluid equivalent to the female contact, must then be forced out of the hole.

Spring biased shutter element are known from US 4 913 514 and US 4 673 242.

### Object

The object of the invention is to provide a device for protecting fiberoptical contacts that overcomes the above mentioned problem.

### The invention

The object is achieved with a device according to the characterizing part of patent claim 1. Further features are clear from the dependent claims.

The invention relates to a device for the protection of fiberoptical contacts, especially in environments where sand or other particle material is present, said device comprises a housing and means to establish connection between an optical fibre situated in a protection pipe with a positioning sleeve, and the optical fibre at the corresponding female contact.

According to the invention, the device comprises:
- a protection means which is arranged axially sliding in a cavity inside the housing and equipped with a contact face with the said opening for receiving the optical positioning sleeve of the associated contact, whereby at the least a part of the protection means is formed with an outward shape corresponding to the inward shape of the housing,
- adjustable closing means to close and expose the opening in the contact face, respectively,
- activation means arranged at the contact face in the protection element, at a closed position in a recess of the same, and linked to the said closing device to expose the opening when executing press force to said activation means,
- a first spring means in the housing, to execute press force to the protection element in the direction of its contact face, and
- a second spring means in the housing to execute press force to the said activation means in the direction of the contact face of the protection element.

In the following there is a detailed description of the invention, by means of an example of an embodiment with reference to the accompanying drawings, where
Figure 1 shows a section through a device according to the invention, in a closed position,
Figure 2 shows a section corresponding to figure 1, in an open position,
Figure 3 shows a part of the protection element in the device according to the invention, in more detail of an assembly of the device in open and closed position.

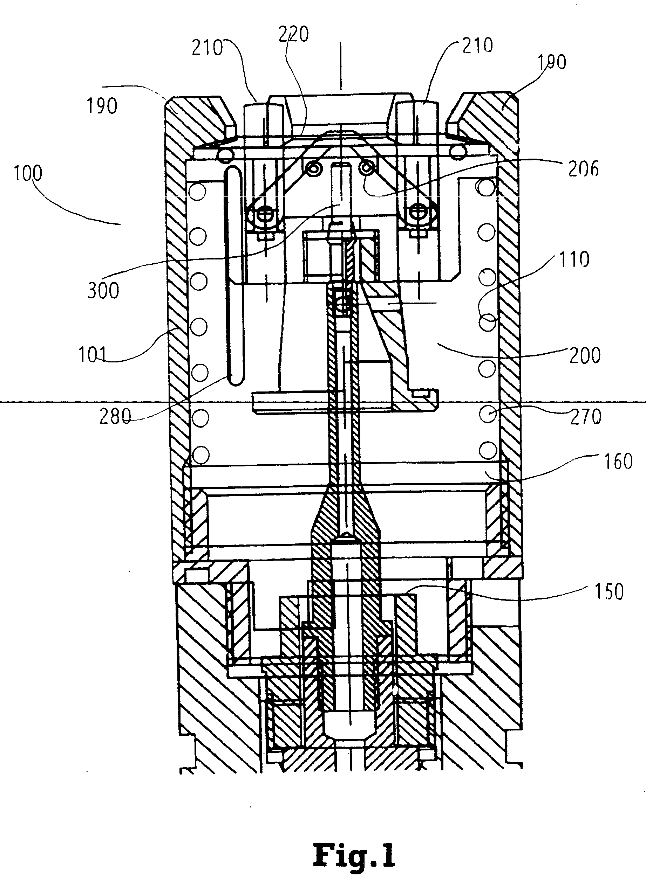

Figure 1 shows in cross section, a portion of a device 100 for protecting fiberoptical contacts, in a closed state. The device 100 comprises a housing 101 with cylindrical cross section provided with a cylindrical cavity 110. In the cylindrical cavity 110 is located a protection element 200, arranged to slide axially in the cavity 110. The head part of the protection element 200 shows an outer cross section which is formed to the inner delimitation of the housing 101, in order to establish a barrier between the inner cavity 110 and the surroundings outside of the device 100, as to establish a protection against penetration of particles such as sand and similar, to the inside of the housing 101.

The end face of the head part of the protection element 200, is formed with a central opening 205 for guiding through protection pipes with position sleeves in corresponding contact (not shown). A first spring means 270 is fixed in the cavity 110 between a generally annular stop means 160 in the housing 101 and the lower side of the head part of the contact element 200, so that the protection element 200 is supported by the spring means 270, and exposed to a press force directed towards the contact face 220 of the device 100 itself.

The head part of the protection element 200 is further provided with two axially extending recesses 204, fixed on diametrical opposite sides of the central opening 205. Longitudinal extending activation pins 210 are arranged form shaped within the recesses 204 and sliding therein. In the position which is shown in Figure 1, both activation pins 210 extend out of the end face or contact face 220 of the protection element 200. A generally longitudinally extending closing means 230 is connected to each of the activation pins 210, and is in one end arranged pivotally around an axis which is extending generally at right angles to the length, or direction of movement within the recesses 204. In the situation corresponding to Figure 1, the second end is curved and extends up over the central opening 205 by the contact face 220 of the protection element 200, so as to cover all of the light opening of the same. In this way there is established a barrier against penetration of particles to the inner cavity 110 of the device 100, thereby protecting the fiberoptical contact against contamination. A slit 280 is formed in the inner wall of the housing 101, in order to house a control pin (not shown) fixed on the protection element 200 so as to avoid rotation of the protection element and associated elements at connecting two independent fiberoptical contacts.

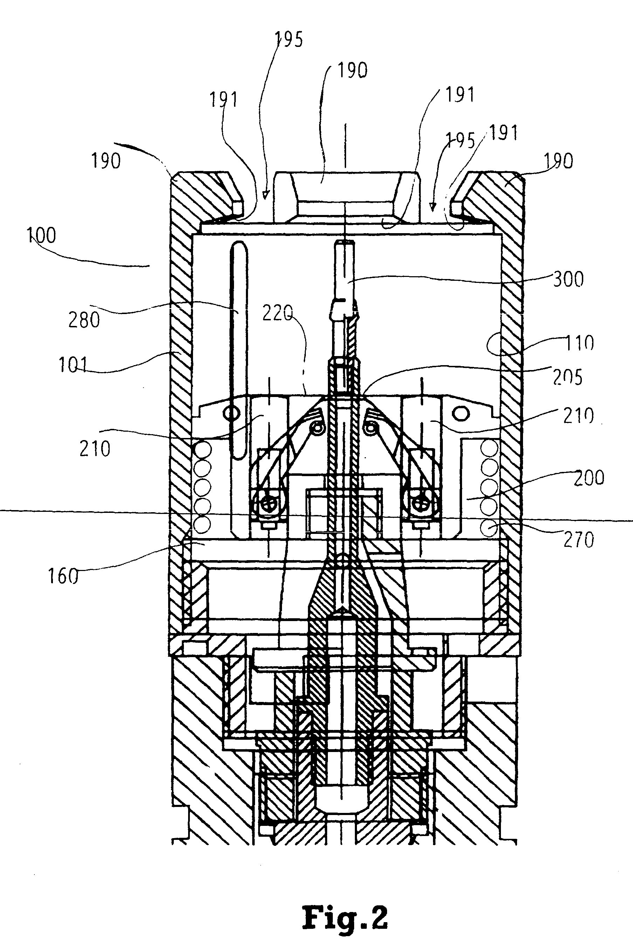

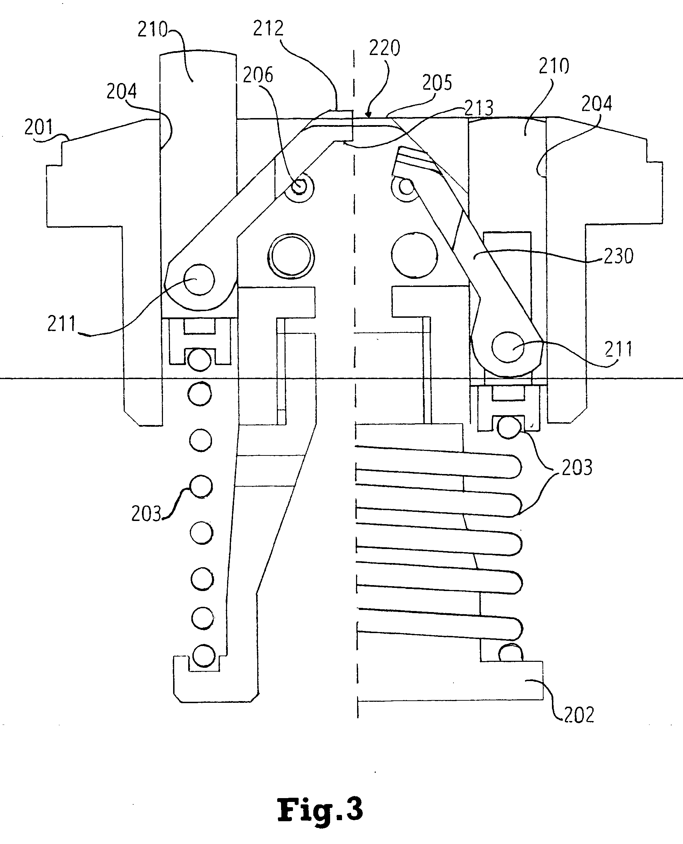

The male contact typically comprises a centrally fixed protection pipe with a position sleeve 300 for the optical fibre, which extends up to the underside of the central opening 205 (fig. 2 and 3) in the head part of the protection element 200.

Figure 2 is a view corresponding to figure 1, but in an open state, where the protection pipe with position sleeve 300 for the optical fibre, is exposed to the environment, and extends from the inside of the device 100, out through the central opening 205 in the protection element 200, and into the now free cavity 110 in the housing 101. A corresponding female contact (not shown) is led into surface contact with the protection element 200, and establishes optical communication from the female contact to the male contact.

Figure 3 shows a schematic assembly of the protection element 200 in a closed and open position on the left and right side of the dotted line, resepctively. A second spring means 203 is fixed in connection to the protection element 200, and is in one end supported by the lower limitation of the protection element 200 by a spring leg 202, and the other end supports against the lower side of the activation pin 210, so as to exert press force to the activation pin directed towards the contact face of the protection element 200. A control pin 206 is fixed under and against each of the closing means 230.

In a situation where a contact should be established between two corresponding fiberoptical contacts, the procedure is as follows. A generally cylindrically formed female contact for an optical fibre (not shown) is led down towards the head part of the device 100 until there is touch contact between the female contact and the activation pins 210. Then the female contact is led further down towards the contact face 220 of the protection element 200, whereby the activation pins 210 are moved down in their respectively recesses 204. At the same time the closing means 230 are drawn down together with the activation pins and slides with its underside on respective control pin 206, whereby the opening 205 in the head part of the protection element 200 gradually opens. When the activation pins 210 are mounted flush with the contact face 220 of the protection element 200, the opening 205 in the same will be completely exposed, whereby the optical fibre in the protection pipe provided with a position sleeve 300 is available for connection with the optical fibre of the corresponding fiberoptical contact. The female contact (not shown) is led further down until the protection element 200 is in face contact with a stop face 150 (Fig. 1), whereby complete connection is established between the two contacts. The procedure for release of the contacts is the opposite of what is described earlier.

When the protection element 200 moves downwards, it opens recesses in the element, which have been closed by the projections 190 until now. The amount of liquid which must be displaced by the female contact is then able to flow freely between the projections.

In a situation where there is no contact between the device 100 and a corresponding contact (not shown), as illustrated in figure 1, the spring device 270 will force the protection element in contact with the head part of the housing 101 to establish a barrier against penetration of particles into the inside of the housing. Correspondingly the second spring means 203 will force the activation pins 210 in the direction of the end face or the contact face 220 of the protection element 200, so as to force the closing means 230 in an upward direction and close the central opening 205 in the protection element 200.

Figure 2 shows a further embodiment of the device according to the invention, which facilitates the connection of two independent contacts. At the head part of the housing 101, there is provided four recesses 190, mutually distributed along the circumference of the housing (Figure 2 only shows three of these). The protection element is further provided with slits or recesses in the circumference of the same, with a shape and in a number that corresponds to the shape and number of the recesses 190 in the head part of the housing 101. When closed, at least one part of the recesses will thus be occupied by the projections in the protection element 200, so as to seal the cavity in the inner of the housing against the environment. When the protection element is slid downwards, the recesses in the circumference of the protection element will be released from the connection with the projections, and establish draining channels so that the amount of liquid that will be displaced by the female contact, can flow easily out of the cavity 110 in the housing 101.

The invention shows accordingly a device for protection of fiberoptical contacts which protects the contact against penetration of particle contamination in a situation where the stationary contact is exposed to a polluted environment.

The illustrated embodiment of the invention according to Figures 1-3 is only one possible variant of the closing mechanism in the device according to the invention. Other embodiments can also be provided without differing from the main idea of the invention. For example, the closing organ 230, in the illustrated embodiment shown as arms, may be replaced by a ball means provided with a through opening, which function is analogous with a ball valve. Correspondingly an embodiment where the closing means 230 extend and move generally in the same level as the contact face 220 in the protection element, is also possible. The illustrated embodiment shows two activation pins 210. These may however be replaced by one or several more pins, such as an annular activation means. Variation such as these are consequently a part of the area of knowledge of a skilled person, based on the fundamental manner of operation which is described earlier.

## Claims

1. Device (100) for protection of fiberoptical contacts, especially in an environment with sand or other particle material, which device comprises a housing (101) and means to establish connection between an optical fibre contact with a protection pipe and a position sleeve (300) and the opposite female contact,
- comprising a protection element (200) arranged to slide axially in a cavity (110) on the inside of the housing (101), the protection element being provided with a throug-hole and a corresponding opening (205) for receiving the optical positioning sleeve of the corresponding contact at a connection face (220) thereof, wherein at the least a part of the protection element (200) is formed with an exterior shape corresponding to the inner shape of the cavity of the cavity of the housing (101),
- adjustable closing means (230) located inside the through-hole of the protection element to respectively close and expose the opening (205) in the connection face (220),
- activation means (210) arranged at the connection face (220) of the protection element (200), in a closed position in a recess (204) of the same, and linked to said closing means (230) in order to expose the opening (205) upon exercising a press force to said activation means (210),
- a first spring means (270) in the housing (101) to exercise a force against the protection element (200) in the direction of its connection face (220), and
- a second spring means (203) in the housing (101) to exercise press force to said activation means (210) in the direction of the connection face (220) of the protection element, **characterized in that** the said activation means (210) comprises two generally extending activating pins arranged at diametrical opposite sides of the opening (205) and adapted to slide axially in formed recesses (204) in the protection element (200), and where said closing means (230) comprises two generally extending arms (230) that at one end are pivotally connected to each activating pin (210), and at a second end are curved and supported by a control pin (206), wherein the said second end of both arms together provide an outer shape that corresponds to the light opening of the hole (205).

2. Device according to claim 1,
**characterized in that** the second spring means (203) at its lower end is supported by a spring leg (202) located at the lower end of the protection element (200), and at its other end by a second spring leg which is arranged in contact with the underside of the activating pins (210).

## Patentansprüche

1. Vorrichtung (100) zum Schutz faseroptischer Kontakte, wobei die Vorrichtung ein Gehäuse (101) aufweist und angeordnet ist, um eine optische Faser aufzunehmen, wobei die Vorrichtung außerdem aufweist:
ein Schutzelement (200), das angeordnet ist, um sich axial in einen Hohlraum (110) im Gehäuse (101) zu verschieben, und mit einem Durchgangsloch versehen ist, das in einer Öffnung (205) an einer Verbindungsfläche (220) davon endet;
eine einstellbare Schließeinrichtung (230), um die Öffnung (205) in der Verbindungsfläche (220) jeweils zu schließen und freizulegen;
eine Aktivierungseinrichtung (210), die in der Verbindungsfläche (220) des Schutzelementes (200) angeordnet und mit der Schließeinrichtung (230) verbunden ist, um die Öffnung (205) bei Anwendung einer Presskraft auf die Aktivierungseinrichtung (210) freizulegen;
eine erste Vorspanneinrichtung (270) für das Ausüben einer Kraft gegen das Schutzelement (200) in der Richtung seiner Verbindungsfläche (220); und
eine zweite Vorspanneinrichtung (203) für das Anwenden einer Kraft auf die Aktivierungseinrichtung (210) in der Richtung der Verbindungsfläche (220) des Schutzelementes,
**dadurch gekennzeichnet, dass** die Schließeinrichtung (230) drehbar mit der Aktivierungseinrichtung (210) verbunden ist.

2. Vorrichtung nach Anspruch 1, bei der die Vorrichtung angeordnet ist, um eine Verbindung zwischen der optischen Faser und einer weiteren optischen Faser herzustellen, bei der sich die Faser in einem Schutzrohr und einer Positionshülse (300) befindet.

3. Vorrichtung nach Anspruch 1 oder 2, bei der mindestens ein Abschnitt des Schutzelementes (200) mit einer Außenform gebildet wird, die der Innenform des Hohlraumes des Gehäuses (101) entspricht.

4. Vorrichtung nach einem der Ansprüche 1 bis 3, bei der die Schließeinrichtung (230) innerhalb des Durchgangsloches des Schutzelementes (200) angeordnet ist.

5. Vorrichtung nach einem der Ansprüche 1 bis 4, bei der die erste und/oder zweite Vorspanneinrichtung eine Feder aufweist.

6. Vorrichtung nach einem der Ansprüche 1 bis 5, bei der die Aktivierungseinrichtung (210) mindestens einen Stift aufweist, der angeordnet ist, um sich axial in einer im Schutzelement (200) ausgebildeten Aussparung (204) zu verschieben.

7. Vorrichtung nach Anspruch 6, bei der die Aktivierungseinrichtung (210) zwei derartige Stifte aufweist, die auf diametral entgegengesetzten Seiten der Öffnung (205) angeordnet sind.

8. Vorrichtung nach Anspruch 7, bei der die Schließeinrichtung (230) zwei Arme (230) aufweist, die an einem Ende drehbar mit einem jeden Aktivierungsstift (210) verbunden und an einem zweiten Ende gebogen sind und durch einen Steuerstift (206) getragen werden, wobei das zweite Ende der beiden Arme zusammen eine äußere Form liefert, die der Öffnung (205) entspricht.

9. Vorrichtung nach einem der Ansprüche 1 bis 7, bei der die Schließeinrichtung eine Kugel aufweist, die mit einer Durchgangsöffnung versehen ist, die sich an der Öffnung (205) im Schutzelement (200) befindet, angeordnet, um sich aus einer geschlossenen Position in eine offene Position zu drehen, aktiviert durch die Aktivierungseinrichtung (210).

10. Vorrichtung nach einem der Ansprüche 1 bis 9, bei der die zweite Vorspanneinrichtung eine Feder (203) aufweist, die an einem ersten Ende durch einen Federschenkel (202) gehalten wird, der an einem Ende des Schutzelementes (200) entgegengesetzt der Verbindungsfläche angeordnet ist, und an ihrem anderen Ende durch einen zweiten Federschenkel, der in Kontakt mit der Aktivierungseinrichtung (210) angeordnet ist.

11. Vorrichtung nach einem der Ansprüche 1 bis 10, bei der der Kopfteil des Gehäuses (101) mit Vorsprüngen (190) ausgebildet ist, die gleichmäßig um den Umfang des Gehäuses beabstandet sind, um so Ablasskanäle (195) zwischen den gleichen herzustellen.

12. Vorrichtung nach Anspruch 11, bei der das Schutzelement (200) mit Aussparungen in seinem Umfang mit einer Form und in einer Anzahl gebildet wird, die den Vorsprüngen (190) im Kopfteil des Gehäuses (101) entspricht.

## Revendications

1. Dispositif (100) de protection de contacts à fibres optiques, le dispositif comprenant un boîtier (101) et étant destiné à recevoir une fibre optique, le dispositif comprenant en outre:
un élément de protection (200) destiné à glisser axialement dans une cavité (110) dans le boîtier (101) et comportant un trou de passage se terminant dans une ouverture (205) au niveau d'une face de connexion correspondante (220);
un moyen de fermeture ajustable (230) destiné à fermer et à exposer respectivement l'ouverture (205) dans la face de connexion (220);
un moyen d'actionnement (210) agencé au niveau de la face de connexion (220) de l'élément de protection (200) et relié audit moyen de fermeture (230) afin d'exposer l'ouverture (205) lors de l'application d'une force de pression audit moyen d'actionnement (210);
un premier moyen poussoir (270), destiné à exercer une force contre l'élément de protection (200) dans la direction de sa face de connexion (220); et
un deuxième moyen poussoir (203) pour appliquer une force audit moyen d'actionnement (210) dans la direction de la face de connexion (200) de l'élément de protection;
**caractérisé en ce que** ledit moyen de fermeture (230) est connecté par pivotement audit moyen d'actionnement (210).

2. Dispositif selon la revendication 1, dans lequel le dispositif est destiné à établir une connexion entre la fibre optique et une fibre optique additionnelle, ladite fibre étant agencée dans un tube de protection et un manchon de positionnement (300).

3. Dispositif selon les revendications 1 ou 2, dans lequel au moins une partie de l'élément de protection (200) a une forme externe correspondant à la forme interne de la cavité du boîtier (101).

4. Dispositif selon l'une quelconque des revendications 1 à 3, dans lequel le moyen de fermeture (230) est agencé à l'intérieur du trou de passage de l'élément de protection (200).

5. Dispositif selon l'une quelconque des revendications 1 à 4, dans lequel les premier et/ou deuxième moyens poussoirs comprennent un ressort.

6. Dispositif selon l'une quelconque des revendications 1 à 5, dans lequel le moyen d'actionnement (210) comprend au moins une goupille destinée à glisser axialement dans un évidement (204) formé dans l'élément de protection (200).

7. Dispositif selon la revendication 6, dans lequel le moyen d'actionnement (210) comprend deux goupilles de ce type, agencées au niveau des côtés diamétralement opposés de l'ouverture (205).

8. Dispositif selon la revendication 7, dans lequel le moyen de fermeture (230) comprend deux bras (230) connectés au niveau d'une extrémité par pivotement à chaque goupille d'actionnement (210) et courbées et supportées par une goupille de commande (206) au niveau de l'autre extrémité, ladite deuxième extrémité des deux bras combinés ayant une forme externe correspondant à celle de l'ouverture (205).

9. Dispositif selon l'une quelconque des revendications 1 à 7, dans lequel le moyen de fermeture comprend une bille comportant une ouverture de passage agencée contre l'ouverture (205) dans l'élément de protection (200), destiné à tourner d'une position fermée vers une position ouverte, son actionnement étant assuré par ledit moyen d'actionnement (210).

10. Dispositif selon l'une quelconque des revendications 1 à 9, dans lequel le deuxième moyen poussoir comprend un ressort (203) supporté au niveau d'une première extrémité par une branche de ressort (202) agencée au niveau d'une extrémité de l'élément de protection (200) opposée à la face de connexion, et au niveau de son autre extrémité par une deuxième branche de ressort en contact avec le moyen d'actionnement (210).

11. Dispositif selon l'une quelconque des revendications 1 à 10, dans lequel la partie de tête du boîtier (101) comporte des saillies (190) espacées de manière régulière autour de la circonférence du boîtier, de sorte à établir des canaux d'évacuation (195) entre elles.

12. Dispositif selon la revendication 11, dans lequel l'élément de protection (200) comporte des évidements dans sa circonférence, dont la forme et le nombre correspondent à ceux des saillies (190) dans la partie de tête du boîtier (101).
